# FASCICULE DE BREVET EUROPEEN

(11) **EP 2 229 751 B1**
(45) Date de publication et mention de la délivrance du brevet: **27.06.2012**
(21) Numéro de dépôt: 08857412.4
(22) Date de dépôt: 28.11.2008
(51) Int. Cl.: H04L 12/28, H04L 12/12, H04L 12/24, H04L 29/08

(54) **PROCEDE ET DISPOSITIF DE REVEIL A DISTANCE D'UN EQUIPEMENT CONNECTE A UN RESEAU**
VERFAHREN UND EINRICHTUNG FÜR DAS WAKE-ON-LAN EINER MIT EINEM NETZWERK VERBUNDENEN EINRICHTUNG
METHOD AND DEVICE FOR THE WAKE-ON-LAN OF A DEVICE CONNECTED TO A NETWORK

(30) Priorité: 30.11.2007 FR 0759467
(43) Date de publication de la demande: 22.09.2010
(73) Titulaire: FRANCE TELECOM, 75015 Paris (FR)
(72) Inventeur: RICHARD, Hervé, F-59240 Dunkerque (FR); MURPHY, Vincent, F-59110 La Madeleine (FR)
(86) Numéro de dépôt international: PCT/FR2008/052150
(87) Numéro de publication internationale: WO 2009/071853

(56) Documents cités:
- EP-A- 1 494 401
- WO-A-2007/024306
- US-A1- 2006 056 397
- YAP KEN: "Wake On LAN proxy (readme, wold.c, wolc.pl, wolc.py, sample.dat from wolp-0.5.tar.gz; index of /wolp)" INTERNET CITATION, [Online] XP002364611 Extrait de l'Internet: URL:http://etherboot.sourceforge.net/wolp/ wolp-0.5.tar.gz> [extrait le 2006-01-26]

## Description

L'invention concerne le domaine des télécommunications et plus particulièrement un procédé et dispositif de réveil d'un équipement connecté à un réseau.

Une solution technique connue pour réveiller, c'est-à-dire allumer électriquement, un terminal susceptible d'accéder à un réseau local lorsque ce terminal est éteint électriquement est décrite par exemple dans les documents de brevet US 5 938 771 et US 6 438 640. Cette solution est connue sous l'appellation anglo-saxonne, "Wake on LAN" (réveil via un réseau local) ou WOL en abrégé. Elle est applicable à tout équipement qui dispose de moyens de connexion à ce réseau, qu'il s'agisse d'un terminal informatique ou d'un autre type d'équipement, par exemple d'un équipement domotique.

Dans le cadre de développement de services d'accès à distance à un contenu d'un terminal, les inventeurs ont constaté le besoin de disposer d'une solution de réveil d'équipement qui permettent de réveiller un équipement à partir d'un autre terminal non connecté au réseau auquel est raccordé le terminal à réveiller, par exemple à partir d'un terminal mobile.

Or, dès lors que le réseau en question est un réseau local privé, non accessible via un réseau public, se pose la question de la transmission de la commande de réveil au terminal destiné à être réveillé. En effet, la solution "Wake on LAN" présuppose qu'un commande de réveil soit émis à travers un réseau local. Or un tel envoi n'est possible que pour un dispositif accédant à ce réseau local. La difficulté consiste donc à envoyer une telle commande au terminal sans compromettre la sécurité du réseau local auquel ce terminal appartient.

La demande de brevet EP 1 494 401 décrit un procédé d'activation et désactivation d'un ordinateur, au moyen d'une commande "Wake On LAN".

La demande de brevet WO 2007 / 051946 décrit un procédé de réveil à distance d'un équipement, à partir d'un système localisé dans un réseau distant.

L'invention a pour but de fournir une solution de réveil d'un équipement connecté à un réseau qui permette de réveiller un équipement à partir d'un terminal non raccordé à ce réseau et ne disposant pas de moyens d'accès à ce réseau, et ce sans compromettre la sécurité de ce réseau.

Dans ce but, l'invention a pour objet, selon un premier aspect, un procédé de réveil d'un équipement connecté à un premier réseau selon la revendication 1.

L'invention suppose la présence, dans le premier réseau ou réseau local, d'un dispositif d'accès via lequel un équipement connecté audit premier réseau est susceptible d'accéder à un deuxième réseau. Un tel dispositif d'accès est en général actif en permanence. L'invention met à profit la présence d'une plateforme de gestion à distance de dispositif d'accès pour transmettre via cette plateforme de gestion une requête de réveil à un tel dispositif d'accès. De la sorte, bien que ce dispositif d'accès ne soit pas prévu pour recevoir des requêtes de n'importe quel dispositif non raccordé à ce réseau, l'envoi de la requête est possible de manière sûre car il s'effectue au moyen d'une liaison de communication existante et sécurisée, notamment parce qu'elle est utilisée pour la communication entre le dispositif d'accès et sa plateforme de gestion associée, en vue de la gestion de ce dispositif d'accès. Ce type de liaison ne peut en effet être utilisé par un dispositif non autorisé.

L'invention a également pour objet un dispositif d'accès selon la revendication 11.

L'invention a également pour objet une plateforme de gestion à distance d'au moins un dispositif d'accès selon la revendication 12.

Les avantages énoncés pour le procédé selon l'invention sont transposables directement au dispositif d'accès et à la plateforme de gestion selon l'invention.

Selon un premier mode de réalisation de l'invention, la requête de réveil est émise conformément à un protocole de gestion à distance de dispositif d'accès à un réseau, par exemple le protocole TR-069. Un tel protocole est utilisé principalement pour la gestion de configuration du dispositif d'accès. Ce premier mode de réalisation consiste donc d'une part à étendre un protocole de gestion à distance de dispositif d'accès à un réseau afin d'y inclure un nouveau type de requête et d'autre part à modifier le dispositif d'accès pour qu'il soit capable de traiter une telle requête. Ce mode de réalisation est particulièrement simple à réaliser puisqu'il utilise un mode de communication déjà existant avec le dispositif d'accès.

Selon un deuxième mode de réalisation, la requête est émise à destination d'un port de communication prédéfini dudit dispositif d'accès, le procédé comprenant une étape de filtrage par le dispositif d'accès des demandes de connexion audit port de communication pour n'établir une connexion via ce port de communication qu'avec un dispositif autorisé. Ce premier mode de réalisation consiste donc à prévoir un nouveau mode de communication avec le dispositif d'accès, via un port de communication prédéfini. Ce mode de communication suppose de prévoir un filtrage des dispositifs tentant de se connecter à ce port de manière à ne pas compromettre la sécurité du réseau privé.

Selon une implémentation, les différentes étapes du procédé selon l'invention sont mises en oeuvre par un logiciel ou programme d'ordinateur, ce logiciel comprenant des instructions logicielles destinées à être exécutées par un processeur de données d'un dispositif d'accès et conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'utilisation combinée de modules logiciels et composants hardware est utilisée pour la mise en oeuvre du procédé selon l'invention. Dans cette optique, le terme module peut correspondre dans ce document aussi bien à un module logiciel ou qu'à un composant hardware. Un module logiciel correspond à un ou plusieurs programmes d'ordinateur, un ou plusieurs sous-programmes d'un programme, ou de manière plus générale à toute partie d'un programme conçue pour mettre en oeuvre une fonction ou un ensemble de fonctions. Un composant hardware correspond à toute partie d'un composant matériel conçue pour mettre en oeuvre une mettre en oeuvre une fonction ou un ensemble de fonctions.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un diagramme des flux de communication entre les entités du système de la figure 1;
- la figure 3 représente un organigramme d'un mode de réalisation du procédé selon l'invention;
- la figure 4 représente plus en détail certains des flux de communication échangés entre les entités du système de la figure 1.

L'invention est applicable à tout équipement accédant à un réseau, que cet équipement soit un terminal informatique, un téléphone IP, un compteur électrique, un équipement domotique, etc. L'invention sera toutefois décrite dans le cas de son application au réveil à distance d'un terminal de type ordinateur personnel.

Réveiller un équipement consiste à le rendre actif alors qu'il est dans un état non actif, par exemple parce qu'il se trouve en état de veille prolongée ou temporaire, ou parce qu'il est éteint, c'est-à-dire dans un état dans lequel il n'est pas alimenté électriquement. Cette activation ou mise en service a pour but de permettre une utilisation de ce terminal.

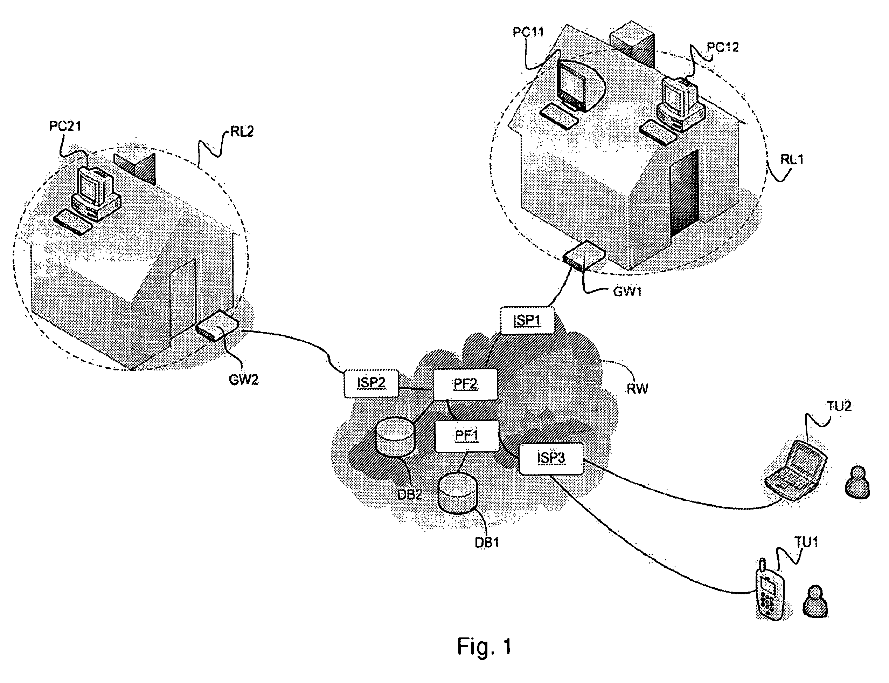

Un système de communication convenant à la mise en oeuvre de l'invention est représenté à la figure 1. Ce système comprend:
- un premier réseau RW de télécommunication, sous forme de réseau étendu (réseau WAN, Wide Area Network), par exemple le réseau Internet;
- deux plates-formes PF1, PF2, accessibles via le réseau RW;
- une base de données DB1 associée à la plate-forme PF1,
- une base de données DB2 associée à la plate-forme PF2,
- trois serveurs ISP1, ISP2, ISP3 de fourniture de service Internet ou "Internet Service Provider";
- deux équipements d'accès GW1, respectivement GW2, pour l'accès au réseau RW, chacun de ces équipements d'accès gérant un réseau local (réseau LAN, Local Area Network) RL1, respectivement RL2, et permettant aux équipements PC11, PC12, respectivement PC21, raccordés au réseau local RL1, respectivement RL2, d'accéder au réseau RW ou d'être accessibles à travers ce réseau RW;
- un ou plusieurs terminaux utilisateur TU 1, TU2, accédant au réseau RW.

Dans l'exemple décrit ici, on suppose que :
- le serveur ISP1 sert de fournisseur d'accès au réseau RW pour le dispositif d'accès GW1 et les équipements du réseau RL1,
- le serveur ISP2 sert de fournisseur d'accès au réseau RW pour le dispositif d'accès GW2 et les équipements du réseau RL2,
- tandis que le serveur ISP3 sert de fournisseur d'accès au réseau RW pour les terminaux TU1 et TU2.

La plateforme PF1 est une plateforme de gestion d'un service de réveil à distance. Elle réalisée sous forme de serveur informatique et équipé de moyens de traitement de données, dont un processeur de donnée, et de moyens de stockage de données de type disque dur ou tout autre support. Elle met en oeuvre un module de traitement des requêtes de demande de réveil en provenance des utilisateurs des terminaux TU1 ou TU2. Elle est couplée avec une base de données DB1 stockant les données nécessaires à la mise en oeuvre de ce service.

La plateforme de service PF1 communique avec la plateforme de gestion PF2 pour la mise en oeuvre de l'invention.

La plateforme de gestion PF2, est une plateforme de gestion de dispositif d'accès. Une telle plateforme est utilisée, de manière connue, pour la maintenance et la configuration de dispositifs d'accès tels que les dispositifs GW1 et GW2. Une opération de maintenance consiste par exemple à procéder à la mise à jour du firmware ou du logiciel d'un des dispositifs GW1 et GW2.

La plateforme de gestion PF2 est couplée à une base de données DB2 stockant les données nécessaires à la mise en oeuvre des opérations de maintenance et de configuration ainsi que des données d'identification et d'authentification des dispositifs d'accès GW1 et GW2.

Ces opérations de maintenance et de configuration s'effectuent par établissement d'une liaison de communication entre la plateforme de gestion PF2 et le dispositif d'accès GW1 ou GW2 concerné. Pour des raisons de sécurité, cette liaison s'effectue de préférence en utilisant un port de communication prédéfini du dispositif d'accès GW1 ou GW2, ce port de communication étant réservé à la communication avec la plateforme de gestion PF2.

Une communication entre le dispositif d'accès GW1 et la plateforme de gestion PF2 associée est établie uniquement, lorsque le dispositif d'accès GW1 détecte sur ce port de communication l'arrivée d'un message en provenance d'un dispositif dont l'adresse IP est celle affectée à la plateforme de gestion PF2. La plateforme de gestion PF2 procède alors à l'authentification du dispositif d'accès GW1, à partir de données d'authentification stockées dans la base de données DB2. En cas d'authentification réussie, une liaison de communication est établie. Dans le cas contraire, le dispositif d'accès GW1 inhibe l'établissement de la liaison. De la sorte, seule la plateforme de gestion PF2 peut communiquer de manière sécurisée avec le dispositif d'accès GW1 ou GW2.

Une communication entre la plateforme de gestion PF2 et le dispositif d'accès GW1 s'effectue en utilisant un protocole convenant à la gestion à distance de dispositif d'accès à un réseau, par exemple le protocole TR-069 ou un autre protocole propriétaire.

Les dispositifs d'accès GW1 et GW2 comprennent chacun un module M1 de réception, traitement et envoi de requête conforme au protocole utilisé pour la gestion à distance de dispositif d'accès.

Les dispositifs d'accès GW1 et GW2 comprennent également un module M2 de génération et envoi de commandes de réveil, utilisant par exemple un processus de réveil via un réseau local.

Un tel processus peut être mis en oeuvre de différentes manières selon l'équipement à réveiller. S'agissant d'un terminal informatique, le processus de réveil utilisable dépend de la carte réseau équipant ce terminal, de la carte mère et du BIOS utilisé.

On suppose dans la suite de la description que le terminal PC11 comprend un BIOS dans lequel l'option autorisant le réveil du terminal PC11 est activée. Cette option est en général activée par défaut sur les terminaux informatiques actuels.

On suppose par ailleurs que la carte réseau du terminal PC11 est conçue pour permettre un réveil de ce terminal et la détection d'une commande de réveil. En particulier, la carte réseau comprend un module alimenté électriquement en permanence, même lorsque le terminal PC11 est éteint électriquement, c'est-à-dire que les autres composants du terminal PC11 ne sont pas alimentés électriquement. Ce module, dit module de réveil, détecte de manière purement électrique les signaux qu'il reçoit, et fait une simple comparaison bit à bit avec l'adresse physique (adresse MAC) du terminal PC11. Lorsque le signal électrique reçu comprend une partie correspondant à cette adresse physique, ce module de réveil est conçu pour provoquer le démarrage électrique du terminal PC11. Un signal de commande est alors envoyé à l'alimentation électrique du terminal PC11 via la carte mère et un connecteur électrique prévu à cet effet.

Les terminaux informatiques actuels ont en général plusieurs états possibles
- un état allumé, dans lequel tous les composants du terminal sont alimentés électriquement et opérationnels;
- un ou plusieurs états de veille, dans lequel un ou plusieurs composants ne sont plus alimentés électriquement ou ;
- un état de veille prolongée ou d'hibernation, dans lequel les données présentes en mémoire vive du terminal au moment de la mise en veille prolongée, sont sauvegardées dans un fichier temporaire sur le disque dur et aucun composant n'est alimenté électriquement.

Le processus de réveil décrit ici fonctionne sur la plupart des terminaux actuels, y compris dans pour une terminal se trouvant dans un état de veille ou de veille prolongée, dès lors que le module de réveil de la carte réseau reste alimenté électriquement dans ces états de veille ou de veille prolongé.

Dans ce cas, l'émission, sur le réseau local, en mode "broadcast" d'une commande de réveil comprenant l'adresse MAC du terminal PC11 à réveiller, provoque le démarrage de ce terminal. Il est ensuite possible d'établir avec ce terminal une liaison de communication à travers le réseau RL1 et RW. En particulier un utilisateur d'un terminal TU1, TU2, peut demander à établir à travers le réseau RW une liaison de communication avec ce terminal, moyennant une authentification de cet utilisateur.

Pour des raisons de sécurité, cette commande de réveil est de préférence envoyée selon un protocole de niveau 2 dans le modèle OSI (Open Systems Interconnection), par exemple au moyen du protocole Ethernet.

La commande de réveil est constituée d'un paquet de données comprenant 116 octets. Les six premiers octets comprennent l'adresse physique du destinataire, en l'occurrence l'adresse MAC du PC à réveiller. Les six octets suivants comprennent l'adresse physique de l'émetteur du paquet de réveil, en l'occurrence l'adresse MAC du dispositif d'accès. Les deux octets suivants comprennent une identification du type de protocole utilisé pour ce paquet de données. Les 102 autres octets de données, sont formés par une suite de bits comprenant seize fois l'adresse physique du PC à réveiller.

On suppose dans la suite de la description que le terminal PC11 permet un réveil à distance selon le processus de réveil décrit ou selon un autre processus de réveil équivalent.

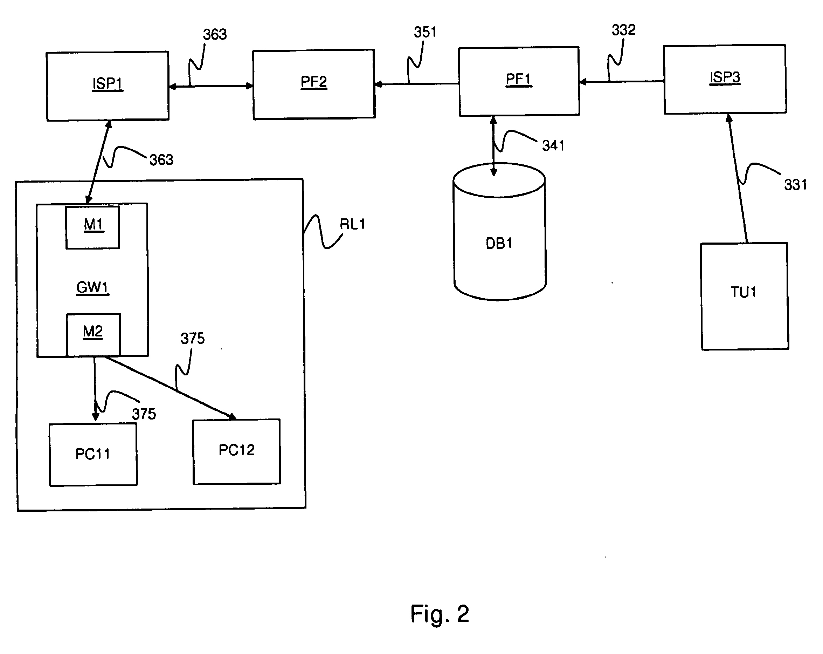

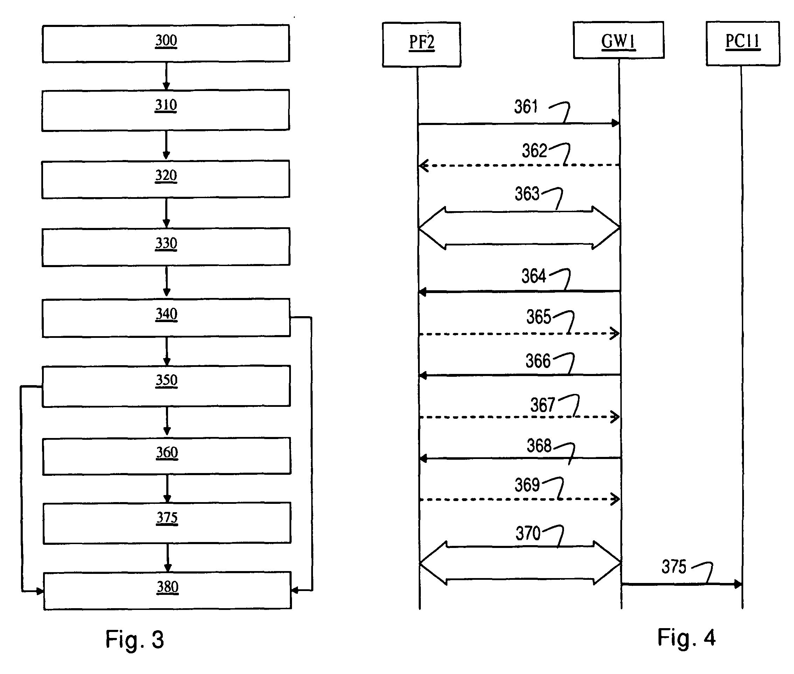

Le procédé selon l'invention est décrit plus en détail par référence à la figure 3 en ce qui concerne les différentes étapes exécutées et par référence à la figure 2 en ce qui concerne les flux de données échangés entre les différentes entités.

Le procédé selon l'invention débute à l'étape 300.

L'étape 310 est une première étape d'initialisation lors de laquelle le dispositif d'accès GW1 s'identifie auprès de la plateforme de gestion PF2 en lui envoyant l'adresse IP affectée par un sous-module du module POP (Point of Presence) du serveur d'accès ISP1 au dispositif d'accès. Cette étape d'identification s'effectue à chaque fois qu'une nouvelle adresse IP est affectée au dispositif d'accès, de manière à ce que la plateforme de gestion PF2 dispose en permanence de l'adresse IP courante du dispositif d'accès GW1 même lorsque cette adresse varie. De cette manière, la plateforme de gestion PF2 peut à tout moment établir une liaison avec le dispositif d'accès GW1. De préférence une authentification mutuelle a lieu entre le dispositif d'accès et la plateforme de gestion PF2 afin d'éviter l'établissement d'une connexion entre le dispositif d'accès GW1 et un dispositif non autorisé.

A l'étape 320, l'adresse physique du terminal PC11 est transmise à la plateforme de service PF1.

Dans un premier mode de réalisation, le terminal PC11 comprend un module pour transmettre lui-même son adresse à la plateforme de service PF1. Dans ce but, une liaison est établie à travers successivement le réseau local RL1, le dispositif d'accès GW1, le serveur d'accès ISP1 puis le réseau RW avec la plateforme de service PF1 de gestion du service. Puis un module du terminal PC11 transmet via cette liaison un identifiant du terminal PC11.

Dans un deuxième mode de réalisation, le dispositif d'accès GW1 interroge les dispositifs raccordés au réseau RL1 afin d'obtenir leur adresse physique respective, puis transmet, avec son identifiant, les adresses obtenues à la plateforme de service PF1. Dans ce deuxième mode de réalisation, cette transmission peut s'effectuer via la plateforme de gestion PF2, au travers d'une liaison conforme au protocole TR-069, liaison qui est usuellement réservée à la gestion du dispositif d'accès GW1, et qui s'avère intéressante pour véhiculer de manière sécurisée une requête de réveil d'équipement.

De manière connue, le protocole TR-069 (ou "CPE WAN Management Protocol"), est un protocole créé pour gérer la communication entre une entité distante et un serveur d'auto configuration associé dans un même réseau. Il comprend un ensemble de services d'administration, de contrôle et de diagnostic.

La liaison établie entre la plateforme de gestion PF2 et le dispositif d'accès GW1 est utilisée notamment pour l'envoi de commandes au dispositif d'accès GW1, pour la configuration du dispositif d'accès GW1, pour la mise à jour de logiciels du dispositif d'accès GW1 et pour superviser les demandes d'accès au réseau RW en provenance du réseau RL1.

Dans les deux cas, la plateforme de service PF1 enregistre dans la base de données DB1 cet identifiant de terminal en association d'une part avec un identifiant du dispositif d'accès GW1 et d'autre part avec un identifiant de l'utilisateur.

L'identifiant du terminal PC11 est de préférence son adresse physique (adresse MAC). L'identifiant de l'utilisateur est par exemple son identifiant d'abonné Internet. L'identifiant de l'abonné est fourni à l'utilisateur par son fournisseur d'accès à Internet ou peut être obtenu par requête au serveur ISP1 via lequel le terminal PC11 accède à Internet. L'identifiant du dispositif d'accès GW1 est par exemple son adresse publique invariable ou identifiant PPP (Point to Point Protocol), c'est-à-dire une adresse sous la forme d'une chaîne de caractères alphanumérique, par exemple "fti/plateformexyz".

Dès lors que ces informations sont enregistrées dans la base de données DB1, la plateforme de service PF1 obtient et enregistre, en association avec cette adresse physique, une information sur l'état de connectivité au réseau RW du terminal PC11. Cette information est binaire et indique si le terminal est connecté ou non réseau RW. Différents modes de réalisation sont possibles en ce qui concerne l'obtention de cette information.

Selon un premier mode de réalisation, le terminal PC11 à réveiller est équipé d'un module permettant, lorsque ce terminal est en état de fonctionnement, d'envoyer à la plateforme de service PF1 une information sur son état de connectivité au réseau RW. En d'autres termes, lorsque le terminal est allumé et connecté au réseau RW, il émet, de préférence à intervalle de temps périodique, une information à destination d'un module de gestion d'état de la plateforme de service PF1. Cette information comprend notamment l'adresse physique du terminal. De préférence, à l'extinction du terminal ou à l'interruption de la connexion au réseau RW, une information indiquant le nouvel état est envoyé par le terminal, ou par le dispositif d'accès GW1, à un module de gestion d'état de la plateforme de service PF1. Par défaut, lorsqu'aucune information sur l'état de connectivité au réseau RW du terminal PC11 n'est envoyée par le terminal à la plateforme de service PF1, le module de gestion d'état mémorise une information d'état indiquant que le terminal n'est pas connecté au réseau RW.

Selon un deuxième mode de réalisation, le module de gestion d'état de la plateforme de service PF1 interroge le dispositif d'accès GW1 associé au terminal PC11, éventuellement par l'intermédiaire de la plateforme de gestion PF2 et via une liaison conforme au protocole TR-069, pour obtenir une information indiquant l'état de connectivité au réseau RW du terminal considéré.

Dans ces deux modes de réalisation, il n'est pas nécessaire que l'utilisateur du terminal PC11 dispose de l'adresse physique du terminal à réveiller, puisque celle-ci est transmise à la plateforme par le terminal PC11 lui-même ou par le dispositif d'accès GW1 associé.

A l'étape 330, on suppose que l'utilisateur du terminal PC11 est en situation de nomadisme et dispose d'un terminal mobile TU1. Il se connecte au réseau Internet RW au moyen de ce terminal mobile TU1 et émet lors des sous-étapes 331, 332 une demande d'accès à son terminal PC11, situé dans le réseau local RL1 à son domicile. Cette demande de connexion est transmise à la plateforme de service PF1 de gestion du service via le serveur ISP1.

A l'étape 340, à réception de la demande de connexion au terminal PC11, la plateforme de service PF1 interroge, lors de la sous-étape 341, la base de données DB1 afin d'obtenir une information sur l'état de connectivité du terminal PC11 au réseau RW. Si l'information obtenue indique que le terminal PC11 est connecté au réseau RW, l'étape 380 est exécutée suite à l'étape 340. Dans le cas contraire c'est l'étape 350 qui est exécutée suite à l'étape 340.

Selon une variante de réalisation de l'étape 340, la plateforme de gestion PF2 tente d'établir une liaison de communication avec le terminal PC11 et en cas d'échec en déduit que le terminal PC11 n'est pas connecté au réseau RW. Dans ce cas l'étape 350 est exécutée suite à l'étape 340. Dans le cas contraire, l'étape 380 est exécutée suite à l'étape 340.

A l'étape 350, le terminal PC11 n'étant a priori pas connecté au réseau RW, la plateforme de service PF1 transmet, lors de la sous-étape 351, à destination de la plateforme de gestion PF2, une requête de réveil du terminal PC11. Cette requête comprend un identifiant du terminal à réveiller, en l'occurrence l'adresse physique du terminal PC11, ainsi que l'identifiant du dispositif d'accès GW1 associé au terminal PC11, identifiant qu'il a mémorisé dans la base de donnée en association avec l'identifiant de l'abonné. De manière connue, il est possible de communiquer avec la plateforme de gestion PF2 au moyen de son adresse publique et d'une interface (API, application program interface) prévue à cet effet.

A l'étape 360, la plateforme de service PF1 établit une connexion sécurisée avec le dispositif d'accès GW1. La procédure d'établissement de cette connexion sécurisée est illustrée en détail à la figure 4 et comprend les sous-étapes 361 à 370 décrites ci-dessous.

Lors de la sous-étape 361, la plateforme de service PF1 émet une requête HTTP (Hyper Text Transfer Protocol) en mode "push", en vue de l'établissement d'une session de communication entre la plateforme de service PF1 et le dispositif d'accès GW1, requête ayant comme adresse de destination l'adresse IP du dispositif d'accès GW1. Cette requête comprend l'adresse IP source de la plateforme de service PF1 et l'URL (Uniform Resource Locator) spécifique à l'agent du dispositif d'accès GW1. Lors de la sous-étape 362, le dispositif d'accès GW1 envoie un acquittement confirmant la réception de la demande.

Lors de la sous-étape 363, une authentification mutuelle a lieu entre la plateforme de service PF1 et le dispositif d'accès GW1, afin de sécuriser la liaison de communication entre ces deux entités. Cette authentification a lieu par exemple selon la procédure de reconnaissance mutuelle (handshake) du protocole SSL (Secure Socket Layer).

Lors de la sous-étape 364, le dispositif d'accès GW1 émet une demande de connexion à destination de la plateforme de service PF1, qui, lors de la sous-étape 365 envoie un acquittement confirmant la réception de la demande de connexion

Lors de la sous-étape 366, le dispositif d'accès GW1 émet à destination de la plateforme de service PF1 une requête HTTP de type "HTTP POST" pour signaler à la plateforme de service PF1 qu'elle est en attente d'une requête.

Lors de la sous-étape 367, la plateforme de service PF1 émet une requête HTTP comprenant une requête de réveil de terminal et l'identifiant du terminal à réveiller, en l'occurrence l'adresse physique du terminal PC11.

Lors de la sous-étape 368, le dispositif d'accès GW1 émet à destination de la plateforme de service PF1 une réponse formant acquittement de la requête reçue à l'étape 367.

Lors de la sous-étape 369, la plateforme de service PF1 émet une requête HTTP pour signaler la fin de la session de communication entre la plateforme de service PF1 et le dispositif d'accès GW1.

Lors de la sous-étape 370, la session de communication entre la plateforme de service PF1 et le dispositif d'accès GW se termine.

A l'étape 375, le dispositif d'accès émet alors en mode "broadcast" une commande de réveil 376 destinée à être détectée par la carte réseau du terminal PC11. Ainsi, toutes les modules de réveil des cartes réseaux des terminaux du réseau RL1 qui sont éteints et correctement configurés au niveau du BIOS comparent cette adresse MAC reçue avec leur propre adresse MAC.

A réception de cette commande, le module de réveil de la carte réseau du terminal PC11, du fait de la correspondance entre le signal émis et son adresse MAC, provoque le démarrage du terminal PC11. L'étape 380 est exécutée ensuite.

Il n'est donc pas nécessaire de transmettre la commande de réveil au travers du réseau étendu RW pour mettre en oeuvre l'invention. La commande de réveil est transmise uniquement à travers le réseau local RL1. De cette manière la sécurité du système est renforcée. En effet, le fait d'autoriser une entité extérieure au réseau à transmettre une telle commande serait susceptible d'être mis à profit pour une intrusion non autorisée dans le réseau.

En outre, la requête de réveil transmise à l'étape 360 au dispositif d'accès GW1 est transmise conformément à un protocole de niveau 3 ou plus dans le modèle OSI (Open System Interconnection), par exemple conformément au protocole HTTP, alors que la commande de réveil est émise à travers le réseau RL1, par un pont (bridge) du dispositif d'accès GW1, conformément à un protocole de niveau 2 dans le modèle OSI, par exemple conformément au protocole Ethernet Link Layer Broadcast. Le fait de changer de niveau dans la pile protocolaire, suppose la présence d'une entité - en l'occurrence le dispositif d'accès GW1 - effectuant la traduction de la requête à un autre niveau protocolaire: ceci renforce la sécurité du système, puisque dans le cas contraire une requête pourrait traverser le dispositif d'accès GW1 sans être détectée et ainsi permettre un accès au terminal PC11. En outre, lorsqu'un terminal est en éteint électriquement, aucune adresse IP ne lui est affectée: il n'est donc pas possible de lui transmettre une commande en utilisant un protocole de niveau supposant l'allocation d'une telle adresse.

A l'étape 380, la plateforme de gestion PF2 transmet la demande de connexion au terminal PC11 via le dispositif d'accès GW1. Si le terminal PC11 n'est pas connecté à Internet, une demande de connexion est envoyée par le dispositif d'accès GW1 au terminal PC11 en vue de l'établissement d'une telle connexion. Une fois cette connexion établie, l'utilisateur du terminal PC11 est en mesure d'accéder au contenu du terminal PC11, par exemple de visualiser les documents électroniques qu'il contient.

Différentes variantes de réalisation et architectures sont possibles. Par exemple, les plateformes PF1 et PF2 peuvent être réunies physiquement en une seule et même plateforme. Dans ce cas les bases de données DB1 et DB2 sont rassemblées en une seule et même base de donnée.

Toute autre répartition des fonctions entre les plateformes PF1 et PF2 est envisageable. Selon la répartition choisie et selon les fonctions requérant un accès à une des bases de données, les bases de données DB1 et DB2 seront dans ce cas rattachées à l'une ou à l'autre des plateformes.

Selon une autre variante, plusieurs utilisateurs sont susceptibles de demander le réveil d'un même terminal. Dans ce cas, la plateforme de service PF1 stocke en association avec l'identifiant de chaque terminal susceptible d'être réveillé les identifiants des utilisateurs autorisés à réveiller ce terminal afin de pouvoir vérifier si un utilisateur envoyant une demande de réveiller est autorisé à réveiller un terminal.

Le système de réveil à distance selon l'invention permet à un utilisateur de réveiller un terminal raccordé ou accédant à un réseau local dans lequel se trouve un dispositif d'accès, et ce sans compromettre la sécurité du réseau. Il est applicable au réveil à distance de tout équipement raccordé à un tel réseau local.

## Revendications

1. Procédé de réveil d'un équipement (PC11) connecté à un premier réseau (RL), comprenant :
- une étape de réception (367) et de traitement, par un dispositif d'accès (GW1) du premier réseau via lequel un équipement du premier réseau est susceptible d'accéder à un deuxième réseau (RW), d'une requête,
- une étape d'émission (375) par le dispositif d'accès, à travers le premier réseau, d'une commande de réveil d'équipement, ladite étape d'émission étant destinée à être exécutée suite à la réception de ladite requête;
**caractérisé en ce que** ladite requête est une requête de réveil d'un équipement déterminé du premier réseau,
et **en ce que** ladite requête est reçue en provenance d'une plateforme de gestion (PF2) à distance d'un ensemble d'au moins un dispositif d'accès incluant ledit dispositif d'accès, via une liaison de communication établie à travers ledit deuxième réseau et utilisée pour une gestion par ladite plateforme dudit dispositif d'accès.

2. Procédé selon la revendication selon la revendication 1, dans lequel ladite requête est émise conformément à un protocole de gestion à distance de dispositif d'accès à un réseau.

3. Procédé selon la revendication 1 ou 2, dans lequel ladite requête est émise conformément à un protocole de niveau différent, selon le modèle OSI, du protocole utilisé pour l'émission de ladite commande de réveil.

4. Procédé selon l'une quelconque des revendications 1 à 3, comprenant une étape de génération de ladite commande par le dispositif d'accès, par constitution d'une commande de format prédéfini comprenant une adresse dudit équipement et un code indiquant que ledit commande est une commande de réveil, ledit code n'étant pas transmis avec ladite requête.

5. Procédé selon la revendication 1, dans lequel ladite requête est émise à destination d'un port de communication prédéfini dudit dispositif d'accès, le procédé comprenant une étape de filtrage par ledit dispositif d'accès des demandes de connexion audit port de communication pour n'établir une connexion via ledit port de communication qu'avec un dispositif autorisé.

6. Signal porteur d'une requête,
la requête étant destinée à être traitée par un dispositif d'accès d'un premier réseau via lequel un équipement du premier réseau est susceptible d'accéder au deuxième réseau et destinée à provoquer une émission, par le dispositif d'accès, à travers le premier réseau, d'une commande de réveil d'équipement,
**caractérisé en ce que** ladite requête est une requête de réveil d'un équipement (PC11) déterminé du premier réseau (RL)
et **en ce que** ledit signal est destiné à être transmis, à travers le deuxième réseau (RW), par une plateforme de gestion (PF2) à distance d'un ensemble d'au moins un dispositif d'accès incluant ledit dispositif d'accès (GW1), via une liaison utilisée pour une gestion par ladite plateforme dudit dispositif d'accès.

7. Signal selon la revendication 6 dans lequel ladite requête est conforme à un protocole convenant à une gestion à distance de dispositif d'accès.

8. Signal selon la revendication 6 ou 7 dans lequel ladite requête comprend une adresse physique dudit équipement.

9. Programme informatique pour un dispositif d'accès via lequel un équipement connecté à un premier réseau est susceptible d'accéder à un deuxième réseau, comprenant des instructions logicielles pour mettre en oeuvre toutes les étapes d'un procédé selon l'une des revendications 1 à 5, lorsque ledit programme est exécuté par le dispositif.

10. Support d'enregistrement lisible par un processeur de données sur lequel est enregistré un programme comprenant des instructions logicielles pour l'exécution de toutes les étapes d'un procédé selon l'une des revendications 1 à 5.

11. Dispositif d'accès (GW1) présent dans un premier réseau (RL) et via lequel un équipement du premier réseau est susceptible d'accéder à un deuxième réseau (RW), comprenant
- des moyens de réception (367) et de traitement d'une requête,
- des moyens d'émission (375) à travers le premier réseau d'une commande de réveil d'équipement, lesdits moyens d'émission étant destinés à être activés suite à la réception de ladite requête,
**caractérisé en ce que** lesdits moyens de réception et de traitement sont des moyens de réception d'une requête de réveil d'un équipement déterminé (PC11) du premier réseau,
et **en ce que** ladite requête est reçue en provenance d'une plateforme de gestion (PF2) à distance d'un ensemble d'au moins un dispositif d'accès incluant ledit dispositif d'accès, via une liaison de communication établie à travers ledit deuxième réseau et utilisée pour une gestion par ladite plateforme dudit dispositif d'accès.

12. Plateforme de gestion (PF2) à distance d'un ensemble d'au moins un dispositif d'accès,
**caractérisé en ce que** la plateforme de gestion comprend des moyens d'envoi d'une requête de réveil d'un équipement (PC11) connecté à un premier réseau (RL), à destination d'un dispositif d'accès (GW1) dudit ensemble, présent dans le premier réseau et via lequel un équipement du premier réseau est susceptible d'accéder à un deuxième réseau (RW),
ladite requête étant transmise à travers ledit deuxième réseau, via une liaison de communication utilisée pour une gestion par ladite plateforme dudit dispositif d'accès.

## Claims

1. Method of waking up a device (PC11) connected to a first network (RL), comprising:
- a step of reception (367) and of processing, by an access device (GW1) of the first network via which a device of the first network is able to access a second network (RW), of a request,
- a step of sending (375) by the access device, through the first network, of a device wakeup command, said sending step being intended to be executed subsequent to the receipt of said request;
**characterized in that** said request is a wakeup request for a determined device of the first network,
and **in that** said request is received from a platform for remote management (PF2) of an assembly of at least one access device including said access device, via a communication link established through said second network and used for management by said platform of said access device.

2. Method according to Claim 1, in which said request is sent in accordance with a network access device remote management protocol.

3. Method according to Claim 1 or 2, in which said request is sent in accordance with a protocol of different level, according to the OSI model, from the protocol used for the sending of said wakeup command.

4. Method according to any one of Claims 1 to 3, comprising a step of generation of said command by the access device, by construction of a command of predefined format comprising an address of said device and a code indicating that said command is a wakeup command, said code not being transmitted with said request.

5. Method according to Claim 1, in which said request is sent to a predefined communication port of said access device, the method comprising a step of filtering by said access device of the demands for connection to said communication port so as to establish a connection via said communication port only with an authorized device.

6. Carrier signal bearing a request,
the request being intended to be processed by an access device of a first network via which a device of the first network is able to access the second network and intended to cause a sending, by the access device, through the first network, of a device wakeup command, **characterized in that** said request is a wakeup request for a determined device (PC11) of the first network (RL)
and **in that** said signal is intended to be transmitted, through the second network (RW), by a platform for remote management (PF2) of an assembly of at least one access device including said access device (GW1), via a link used for management by said platform of said access device.

7. Signal according to Claim 6, in which said request complies with a protocol appropriate to access device remote management.

8. Signal according to Claim 6 or 7, in which said request comprises a physical address of said device.

9. Computer program for an access device via which a device connected to a first network is able to access a second network, comprising software instructions for implementing all the steps of a method according to one of Claims 1 to 5, when said program is executed by the device.

10. Recording medium readable by a data processor on which is recorded a program comprising software instructions for the execution of all of the steps of a method according to one of Claims 1 to 5.

11. Access device (GW1) present in a first network (RL) and via which a device of the first network is able to access a second network (RW), comprising
- means for receiving and processing a request,
- means for sending (375) through the first network of a device wakeup command, said sending means being intended to be activated subsequent to the receipt of said request,
**characterized in that** said means for receiving and processing a request are means for receiving and processing a wakeup request for a determined device (PC11) of the first network,
said request being received from a platform for remote management (PF2) of an assembly of at least one access device including said access device, via a communication link established through said second network and used for management by said platform of said access device.

12. Platform for remote management (PF2) of an assembly of at least one access device,
**characterized in that** the management platform comprises means for dispatching a wakeup request for a device (PC11) connected to a first network (RL), to an access device (GW1) for said assembly, present in the first network and via which a device of the first network is able to access a second network (RW),
said request being transmitted through said second network, via a communication link used for management by said platform of said access device.

## Patentansprüche

1. Verfahren zum Aufwecken einer mit einem ersten Netz (RL) verbundenen Anlage (PC11), das Folgendes umfasst:
- einen Schritt (367) zum Empfangen und Verarbeiten einer Anforderung durch eine Zugangsvorrichtung (GW1) des ersten Netzes, über das eine Anlage des ersten Netzes auf ein zweites Netz (RW) zugreifen kann,
- einen Schritt (375) zum Senden eines Befehls zum Aufwecken der Anlage durch die Zugangsvorrichtung über das erste Netz, wobei der Sendeschritt dazu bestimmt ist, nach dem Empfangen der Anforderung ausgeführt zu werden;
**dadurch gekennzeichnet, dass** die Anforderung eine Anforderung zum Aufwecken einer bestimmten Anlage des ersten Netzes ist,
und dass die Anforderung von einer Fernsteuerplattform (PF2) einer Gesamtheit von wenigstens einer Zugangsvorrichtung, die die Zugangsvorrichtung enthält, über eine Kommunikationsverbindung, die über das zweite Netz hergestellt wird und für die Steuerung durch die Plattform der Zugangsvorrichtung verwendet wird, empfangen wird.

2. Verfahren nach Anspruch 1, wobei die Anforderung in Übereinstimmung mit einem Fernsteuerungsprotokoll der Zugangsvorrichtung zu einem Netz gesendet wird.

3. Verfahren nach Anspruch 1 oder 2, wobei die Anforderung in Übereinstimmung mit einem Protokoll einer Ebene gesendet wird, die gemäß dem OSI-Modell von jener des Protokolls, das zum Senden des Aufweckbefehls verwendet wird, verschieden ist.

4. Verfahren nach einem der Ansprüche 1 bis 3, das einen Schritt zum Erzeugen des Befehls durch die Zugangsvorrichtung durch Bilden eines Befehls mit im Voraus definiertem Format, das eine Adresse der Anlage und einen Code, der angibt, dass der Befehl ein Aufweckbefehl ist, enthält, wobei der Code nicht mit der Anforderung gesendet wird, umfasst.

5. Verfahren nach Anspruch 1, wobei die Anforderung zu einem im Voraus definierten Kommunikationsanschluss der Zugangsanforderung gesendet wird, wobei das Verfahren einen Schritt zum Filtern durch die Zugangsvorrichtung von Verbindungsanforderungen mit dem Kommunikationsanschluss umfasst, um eine Verbindung über den Kommunikationsanschluss nur mit einer berechtigten Vorrichtung herzustellen.

6. Trägersignal für eine Anforderung,
wobei die Anforderung dazu bestimmt ist, von einer Zugangsvorrichtung eines ersten Netzes verarbeitet zu werden, über die eine Anlage des ersten Netzes auf das zweite Netz zugreifen kann, und dazu bestimmt ist, ein Senden durch die Zugangsvorrichtung über das erste Netz eines Befehls zum Aufwecken einer Anlage hervorzurufen,
**dadurch gekennzeichnet, dass** die Anforderung eine Anforderung zum Aufwecken einer bestimmten Anlage (PC11) des ersten Netzes (RL) ist,
und dass das Signal dazu bestimmt ist, von einer Fernsteuerplattform (PF2) einer Gesamtheit von wenigstens einer Zugangsvorrichtung, die die Zugangsvorrichtung (GW1) enthält, über das zweite Netz (RW) über eine Verbindung, die für eine Steuerung durch die Plattform der Zugangsvorrichtung verwendet wird, gesendet zu werden.

7. Signal nach Anspruch 6, wobei die Anforderung mit einem Protokoll in Übereinstimmung ist, das für eine Fernsteuerung der Zugangsvorrichtung geeignet ist.

8. Signal nach Anspruch 6 oder 7, wobei die Anforderung eine physikalische Adresse der Anlage umfasst.

9. Datenverarbeitungsprogramm für eine Zugangsvorrichtung, über die eine mit einem ersten Netz verbundene Anlage auf ein zweites Netz zugreifen kann, das Software-Befehle umfasst, um sämtliche Schritte eines Verfahrens nach einem der Ansprüche 1 bis 5 auszuführen, wenn das Programm durch die Vorrichtung ausgeführt wird.

10. Aufzeichnungsträger, der durch einen Datenprozessor lesbar ist, in dem ein Programm aufgezeichnet ist, das Software-Befehle für die Ausführung sämtlicher Schritte eines Verfahrens nach einem der Schritte 1 bis 5 enthält.

11. Zugangsvorrichtung (GW1), die in einem ersten Netz (RL) vorhanden ist und über die eine Anlage des ersten Netzes auf ein zweites Netz (RW) zugreifen kann, die Folgendes umfasst:
- Mittel für den Empfang und die Verarbeitung einer Anforderung,
- Sendemittel (375), um über das erste Netz einen Befehl zum Aufwecken einer Anlage zu senden, wobei die Sendemittel dazu bestimmt sind, nach dem Empfang der Anforderung aktiviert zu werden,
**dadurch gekennzeichnet, dass** die Mittel für den Empfang und die Verarbeitung einer Anforderung Mittel für den Empfang und die Verarbeitung einer Anforderung zum Aufwecken einer bestimmten Anlage (PC11) des ersten Netzes sind,
wobei die Anforderung von einer Fernsteuerungsplattform (PF2) einer Gesamtheit von wenigstens einer Zugangsvorrichtung, die die Zugangsvorrichtung enthält, über eine Kommunikationsverbindung, die über das zweite Netz hergestellt wird und für eine Steuerung durch die Plattform der Zugangsvorrichtung verwendet wird, empfangen wird.

12. Fernsteuerplattform (PF2) einer Gesamtheit von wenigstens einer Zugangsvorrichtung,
**dadurch gekennzeichnet, dass** die Steuerplattform Mittel um Schicken einer Anforderung zum Aufwecken einer Anlage (PC11), die mit einem ersten Netz (RL) verbunden ist, zu einer Zugangsvorrichtung (GW1) der Gesamtheit, die in dem ersten Netz vorhanden ist und über die eine Anlage des ersten Netzes auf ein zweites Netz (RW) zugreifen kann, umfasst,
wobei die Anforderung über das zweite Netz über eine Kommunikationsverbindung gesendet wird, die für eine Steuerung durch die Plattform der Zugangsvorrichtung verwendet wird.
